# EUROPÄISCHE PATENTSCHRIFT

(11) **EP 1 453 659 B1**
(45) Veröffentlichungstag und Bekanntmachung des Hinweises auf die Patenterteilung: **09.07.2008**
(21) Anmeldenummer: 02791727.7
(22) Anmeldetag: 27.11.2002
(51) Int. Cl.: B29C 70/44

(54) **VERFAHREN ZUR HERSTELLUNG VON GLAS- BZW. KOHLEFASERVERSTÄRKTEN KUNSTSTOFFEN**
METHOD FOR PRODUCING FIBERGLASS-REINFORCED OR CARBON FIBER-REINFORCED SYNTHETIC MATERIALS
PROCÉDÉ DE PRODUCTION DE MATIERES SYNTHETIQUES RENFORCÉES PAR FIBRES DE VERRE OU DE CARBONE

(30) Priorität: 12.12.2001 DE 10160956
(43) Veröffentlichungstag der Anmeldung: 08.09.2004
(73) Patentinhaber: FIBERTEX A/S, 9220 Aalborg Ost (DK)
(72) Erfinder: LAURIDSEN, Keld, DK-9220 Älborg (DK)
(74) Vertreter: Lorenz, Eduard
(86) Internationale Anmeldenummer: PCT/EP2002/013379
(87) Internationale Veröffentlichungsnummer: WO 2003/053660

(56) Entgegenhaltungen:
- WO-A-99/37469
- DE-C- 19 834 983
- GB-A- 2 346 827
- US-A- 4 062 917
- US-A- 4 702 376
- US-A- 4 942 013

## Beschreibung

Die Erfindung betrifft ein Verfahren zur Herstellung von glas- bzw. kohlefaserverstärkten Kunststoffen.

Es sind unterschiedliche Herstellverfahren für glas- bzw. kohlefaserverstärkte Kunststoffe bekannt. Neben dem Handlaminieren, in welchem als Schalung unbeheizte, offene Werkzeuge, beispielsweise Holzformen, verwendet werden, haben sich Vakuumverfahren oder auch Schleuderverfahren durchgesetzt.

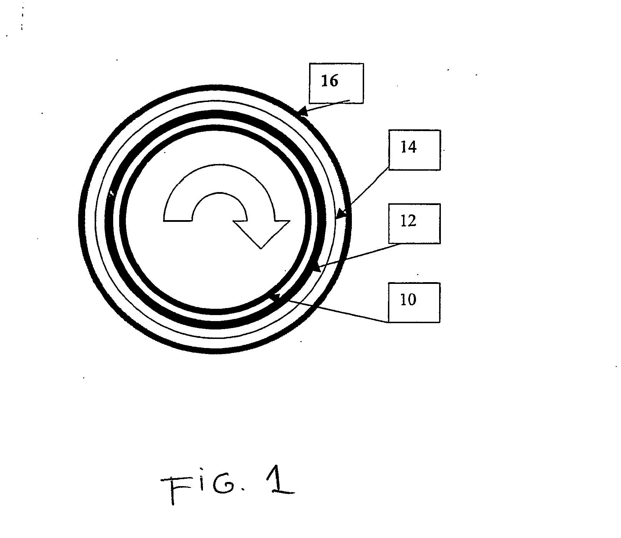

Ein Schleuderverfahren nach dem Stand der Technik ist schematisch in der Figur 1 erläutert. Dort ist auf eine in Pfeilrichtung a rotierende Trommel 10 harzgetränktes Laminat 12 aufgelegt, das mit einer Abziehschicht (Peelply) 14 umgeben ist, die als solches gas- und flüssigkeitsdurchlässig ist. Diese erste Abziehschicht 14 ist von einer zweiten Abziehschicht 16 umgeben, die aus einem Polyamidgewebe besteht. Beim Schleudern der Trommel 10 in Pfeilrichtung a tritt überschüssiges Harz aus der harzgetränkten Laminatschicht 12 aus und durchdringt die erste Abziehschicht, um in die zweite Abziehschicht 16 einzudringen. Aufgrund der Gewebestruktur dieser aus beispielsweise Polyamid bestehenden Gewebeschicht tritt während des Schleuderns Harz aus und verunreinigt die Umgebung der Schleudervorrichtung. Nach Erhärten des Harzes ist es üblicherweise sehr schwierig, die Abziehschicht, die im übrigen starr und wenig flexibel ist, von der Abziehschicht 14 auf der Trommel 10 zu lösen.

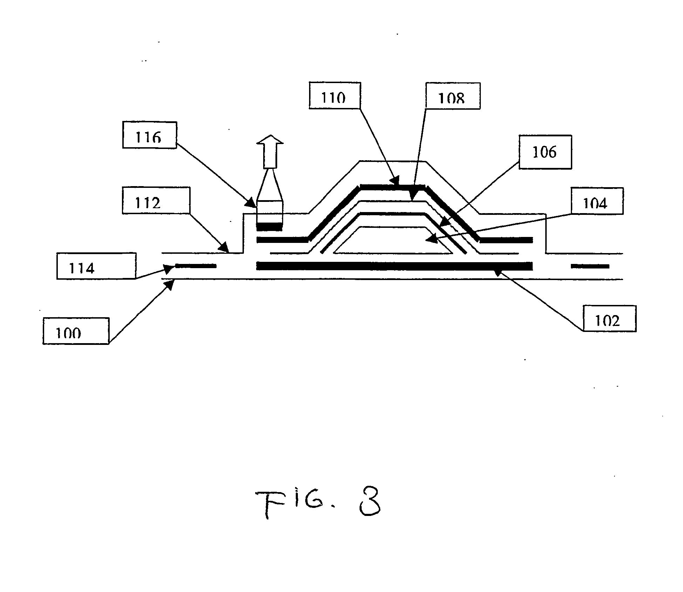

In der Figur 3 ist ein anderes Herstellverfahren für einen glas- bzw. kohlefaserverstärkten Kunststoff schematisch dargestellt. Hier ist auf einem Tisch 100 eine Form 102 aufgebracht auf welche bzw. in welche harzgetränktes Laminat 104 geschichtet ist. Um das harzgetränkte Laminat 104 ist eine Abziehschicht 106 gelegt. Die Abziehschicht 106 ist von einer durchlässigen Trennfolie 108 umgeben. Diese wiederum ist mittels einer aufsaugenden Schicht 110 umgeben. Die aufsaugende Schicht 110 wiederum ist mittels einer gasdichten Folie 112 eingehüllt, die seitlich über Dichtungen 114 abgedichtet ist. Innerhalb der gasdichten Folie 112 sind Vakuumabsaugeinrichtungen 116 vorgesehen, über die Vakuum anlegbar ist. Dieses Vakuum wird durch die Aufsaugschicht 110 gleichmäßig verteilt, so dass überschüssiges Harz aus dem Laminat 104 über die luftdurchlässige und flüssigkeitsdurchlässige Abziehschicht 106 und die durchlässige Trennfolie 108 in die Aufsaugschicht 110 überführt wird. Nach Aushärten des glas- bzw. kohlefaserverstärkten Kunststoffs können die einzelnen Folien bei dem hier vorliegenden Verfahren insbesondere aufgrund der durchlässigen Trennfolie 108 vergleichsweise leicht von dem Laminat 104 getrennt werden. Der hier vorhandene Aufbau zur Durchführung des Verfahrens ist jedoch vergleichsweise aufwendig und teuer, da eine Reihe von unterschiedlichen Schichten auf dem Laminat 104 aufzubringen sind.

Ein weiteres Verfahren zur Herstellung von glas- bzw. hohlfaserverstärkten Kunststoffen ist aus der WO-A-99/37469 bekannt.

Aufgabe der Erfindung ist es, ein neues Verfahren zur Herstellung von glas- bzw. kohlefaserverstärkten Kunststoffen an die Hand zu geben, mit dem die Verfahren vereinfacht und verbilligt werden können.

Erfindungsgemäß wird diese Aufgabe durch ein Verfahren zur Herstellung von glas- bzw. kohlefaserverstärkten Kunststoffen nach dem Anspruch 1 oder dem Anspruch 2 gelöst.

Hier wird ein Vlies als Schicht zur Aufnahme von während des Herstellungsprozesses austretendem überschüssigen Harz verwendet, das aus wärmegebundenen Kunststoffasern besteht, wobei zumindest eine Seite des Vlieses eine verfestigte Oberfläche mit kleinerer Porengröße im Vergleich zur sonstigen Porengröße des Vlieses aufweist. Dieses Vlies weist eine Reihe von Vorteilen auf. Es kann sowohl in einem Schleuderverfahren wie auch in einem Vakuumverfahren zur Herstellung von glas- bzw. kohlefaserverstärkten Kunststoffen verwendet werden. Es hat sich ergeben, dass die erfindungsgemäßen Vlies bei der Verwendung im Schleuderverfahren das austretende Harz optimal speichern können. Nach Aushärten des Harzes können diese aufgrund ihrer verfestigten Oberfläche mit kleiner Porengröße leicht von der auf der Abziehschicht der Trommel gelöst werden. Selbst mit dem aufgesaugten und erhärteten Harz ist das erfindungsgemäße Vlies so flexibel, dass es aufgerollt und somit leicht gehandhabt werden kann.

Bei Verwendung im Vakuumverfahren kann das Vlies zwei Schichten, nämlich die durchlässige Trennfolie und die über diese angeordnete Aufnahmeschicht ersetzen. Die gesondert vorzusehende durchlässige Trennfolie ist aufgrund der befestigten Oberflächeneigenschaften kleinerer Porengrößen ersetzbar. Diese Oberfläche ermöglicht es nämlich, das Vlies in einfacher Weise von der ersten Abziehschicht, die unmittelbar über dem harzgetränkten Laminat angeordnet ist, abzuziehen.

Besonders vorteilhafte Ausgestaltungen des erfindungsgemäßen Verfahrens ergeben sich aus den sich an den Hauptanspruch anschließenden Unteransprüchen.

Demnach kann das Vlies ein Flächengewicht von 50 g/m² bis 1000 g/m² haben. Besonders bevorzugt ist ein Vlies mit einem Flächengewicht von 100 g/m² bis 600 g/m². Weiterhin hat es eine vorzugsweise Dicke von 0,3 mm bis 12 mm.

Schließlich besteht das erfindungsgemäße Vlies aus Polypropylen, Polyester und/oder Polyamidfasern bzw. aus Mischungen dieser Materialien.

Falls die das Vlies bildenden Fasern in einem Meltblownverfahren hergestellt werden, weisen sie vorteilhaft 0,01 dtex bis 0,5 dtex (Mikrofasern), auf. Werden sie in einem anderen Verfahren hergestellt, weisen sie vorzugsweise 0,8 dtex bis 20 dtex.

Die Vliese können aus feinen Fasem bestehen oder die Vliese können entweder aus dicken oder aus einem Gemisch von dicken und feinen Fasern bestehen. Die feinen Fasern ermöglichen die Herstellung von Vliesen mit feiner Porengröße, während die dicken Fasem für Vliese mit guter Absorptionseigenschaft dienen. Vorteilhaft lassen sich diese Eigenschaften bei der Vliesproduktion kombinieren, so z.B. zur Herstellung mehrschichtiger Vliese, wobei die einzelnen Schichten aus verschieden dicken Fasem bestehen.

Einzelheiten und Vorteile der Erfindung werden anhand von zwei in der Zeichnung dargestellten Ausführungsbeispielen näher erläutert.

Es zeigen:
- Figur 1:: eine schematische Darstellung eines Schleuderverfahrens nach dem Stand der Technik,
- Figur 2:: eine schematische Darstellung eines Schleuderverfahrens zur Verdeutlichung einer ersten Ausführungsvariante der vorliegenden Erfindung,
- Figur 3:: eine schematische Darstellung eines Vakuumverfahrens nach dem Stand der Technik und
- Figur 4:: eine schematische Darstellung eines Vakuumverfahrens nach einer weiteren erfindungsgemäßen Ausführungsvariante der vorliegenden Erfindung.

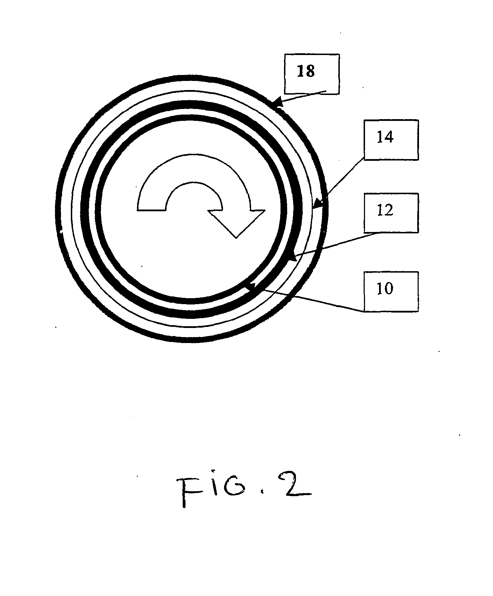

In Figur 2 ist schematisch ein Schleuderverfahren dargestellt, das im Wesentlichen demjenigen bereits zuvor beschriebenen nach Figur 1 entspricht. Hier ist allerdings anstelle der äußeren Schicht aus Polyamidgewebe 16, wie es nach dem Stand der Technik gemäß Figur 1 verwendet wurde, eine aus einem Vlies 18 bestehende Schicht vorgesehen. Die Schicht 18 besteht aus einem Vlies, das aus wärmegebundenen Kunststoffasern hergestellt wurde, wobei zumindest eine Seite des Vlieses eine verfestigte Oberfläche mit einer Porengröße aufweist, die kleiner ist als die Porengröße des übrigen Vlieses. Diese verfestigte Oberfläche ermöglicht eine besonders günstige Grenzflächeneigenschaft gegenüber der ersten Abziehschicht 14, die als solches ja flüssigkeits- und gasdurchlässig ist. So wird hier aufgrund der entsprechend eingestellten Porengröße das Harz einerseits im Laminat 12 zurückgehalten und andererseits zu einem Teil in das Vlies aufgesogen und dort gespeichert. Zum anderen ist aufgrund der verfestigten Oberfläche mit kleiner Porengröße ein Abnehmen des Vlieses 18 von der Abziehschicht 14 problemlos möglich. Aufgrund der Eigenschaften des Vlieses kann dieses auch mit dem aufgesaugten und im Vlies verfestigten Harz aufgerollt und so leicht entsorgt werden. Besonders vorteilhaft ist es, dass sich auf der Oberfläche des ausgehärteten glas- bzw. kohlefaserverstärkten Kunststoffkörpers 12 keinerlei unerwünschte Harzkanten bilden. Die in der Darstellung 2 wiedergegebene kreisrunde Trommel 10 kann auch eine andere Schalung beliebiger Form sein.

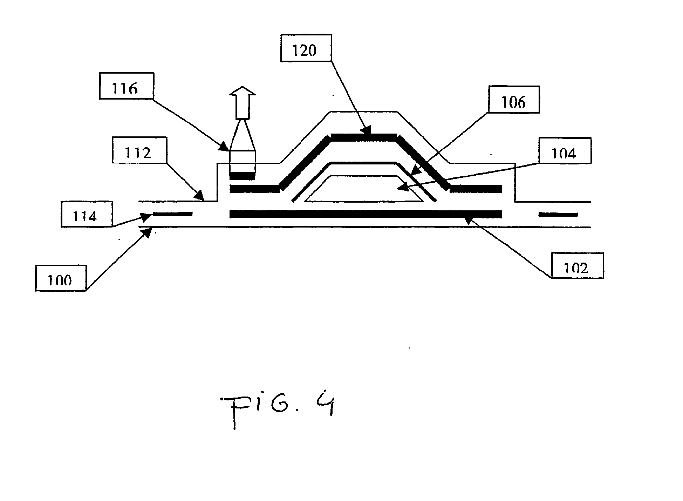

In Figur 4 ist schematisch ein Vakuumverfahren unter Verwendung des erfindungsgemäßen Vlieses dargestellt. Dieses entspricht im Wesentlichen demjenigen gemäß Figur 3, das zuvor als Stand der Technik beschrieben wurde. Jedoch sind die durchlässige Trennfolie 108 und die Aufsaugschicht 110 hier durch das Vlies 120 ersetzt. Hier wird durch eine einzige Schicht, nämlich das Vlies 120, zum einen die durchlässige Trennfolie 108 gemäß Figur 3 und die Aufnahmeschicht 110 gemäß Figur 3 ersetzt. Hierdurch ist einerseits die Handhabung wesentlich erleichtert. Das neue Verfahren ist auch kostengünstiger als das Mehrschichtverfahren gemäß dem Stand der Technik. Aufgrund der Porenstruktur des Vlieses ist zum einen eine sehr gute Verteilung des Vakuums über die gesamte Laminatstruktur 104 gewährleistet. Zum anderen wird gleichflächig das überschüssige Harz aufgesogen. Hierdurch wird eine glatte und ebenmäßige Oberfläche ohne Ecken und Kanten bzw. Verwerfungen beim zu formenden glas- bzw. kohlefaserverstärkten Kunststoffbauteil sichergestellt.

Das Vlies 120 bzw. 18 wird hauptsächlich aus thermoplastischen Fasem aus Polypropylen, Polyester, Polyamid und/oder Copolymeren dieser Stoffe hergestellt. Es kommen Stapelfasern, Endlosfasern, Bikomponentfasern oder Mischungen von diesen zum Einsatz. Das Herstellverfahren des Vlieses als solches ist bekannt und wird daher hier nicht nochmals ausführlich erläutert. Als Vlies 120 bzw. 18 kann ein übliches Vlies, ein Nadelvlies, ein spunbonded Vlies, ein meltbown Vlies, ein im Luftstrom aufgebrachtes Vlies (airlaid Vlies) alleine oder in Kombination verwendet werden. Wesentlich ist es, dass eine Seite des Vlieses eine verfestigte Oberfläche mit vergleichsweise kleinerer Porengröße aufweist. Diese Verfestigung kann beispielsweise durch Wärmebehandlung der Oberfläche aber auch durch andere Verfahrensschritte entstehen.

Bei dem erfindungsgemäßen Vlies 120 bzw. 18 ergibt sich eine sehr gute Flexibilität in der Absorptionskapaziät für das überschüssige Harz durch Anpassung des Flächengewichtes des Vlieses 120 bzw. 18 oder durch Überlappen mehrerer Schichten des Vlieses. Somit kann durch das entsprechend gewählte Flächengewicht oder durch eine mehrfache Schicht des Vlieses mehr Absorptionsvolumen zur Aufnahme des überschüssigen Harzes bereitgestellt werden.

## Patentansprüche

1. Verfahren zur Herstellung von glas- bzw. kohlefaserverstärkten Kunststoffen mit folgenden Schritten:
- auf einer rotierenden Schalung wird ein harzgetränktes Laminat aufgebracht,
- dieses wird mit einer ersten gas- und flüssigkeitsdurchlässigen Abziehschicht umwickelt,
- diese wiederum wird mit einem Vlies bestehend aus wärmegebundenen Kunststoffasern derart, dass zumindest eine Seite des Vlieses eine verfestigte Oberfläche mit verglichen zur sonstigen Porengröße des Vlieses kleinerer Porengröße aufweist, umgeben, wobei die verfestigte Oberfläche mit der vergleichsweise kleinerer Porengröße des Vlieses benachbart zur ersten Abziehschicht angeordnet ist.

2. Verfahren zur Herstellung von glas- bzw. kohlefaserverstärkten Kunststoffen mit folgenden Schritten:
- harzgetränktes Laminat wird auf eine Form aufgebracht,
- dieses Laminat wird mit einer flüssigkeits- und gasdurchlässigen Abziehschicht umgeben,
- oberhalb dieser Abziehschicht wird ein Vlies bestehend aus wärmegebundenen Kunststoffasern derart, dass zumindest eine Seite des Vlieses eine verfestigte Oberfläche mit verglichen zur sonstigen Porengröße des Vlieses kleinerer Porengröße aufweist, derart aufgebracht, dass die Seite des Vlieses mit der verfestigten Oberfläche und den vergleichsweise kleineren Porengrößen benachbart zu der Abziehschicht angeordnet ist und
- das Vlies wird mit einer vakuumdichten Folie umgeben, wobei in dieser Absaugöffnungen vorgesehen sind, über die ein Vakuum angelegt wird.

3. Verfahren nach Anspruch 1 oder 2, **dadurch gekennzeichnet, dass** das Vlies ein Flächengewicht zwischen 50 g/m² bis 1000 g/m², bevorzugt 100 g/m² bis 600 g/m² hat.

4. Verfahren nach einem der Ansprüche 1 bis 3, **dadurch gekennzeichnet, dass** es eine Schichtdicke zwischen 0,3 mm und 10 mm hat.

5. Verfahren nach einem der Ansprüche 1 bis 4, **dadurch gekennzeichnet, dass** das Vlies aus Polypropylen und/oder Polyester und/oder Polyamidfasern und/oder Copolymeren der vorgenannten Stoffe besteht.

6. Verfahren nach einem der Ansprüche 1 bis 5, **dadurch gekennzeichnet, dass** die das Vlies bildenden in einem Meltblownverfahren hergestellten Mikrofasern 0,01 dtex bis 0,5 tex aufweisen.

7. Verfahren nach einem der Ansprüche 1 bis 6, **dadurch gekennzeichnet, dass** die das Vlies bildenden Fasem 0,8 dtex bis 20 dtex aufweisen.

8. Verfahren nach einem der Ansprüche 1 bis 7, **dadurch gekennzeichnet, dass** das Vlies aus feinen Fasern, aus dicken oder dicken und feinen Fasern besteht.

9. Verfahren nach einem der Ansprüche 1 bis 8, **dadurch gekennzeichnet, dass** durch den Einsatz feiner Fasem kleine Porengrößen eingestellt werden und durch den Einsatz dicker Fasern eine hohe Absorptionskapazität erzielt wird.

10. Verfahren nach Anspruch 9, **dadurch gekennzeichnet, dass** es aus einer an zumindest einer Oberfläche angeordneten Schicht mit feinen Fasern, die eine kleine Porengröße aufweist, und einer daran anschließenden Schicht aus dikken Fasern mit hoher Absorptionskapazität besteht.

## Claims

1. Method for producing fibreglass-reinforced or carbon fibre-reinforced synthetic materials with the following steps:
- a resin-impregnated laminate is applied to a rotating formwork,
- said laminate is wrapped with a first gas-permeable and liquid-permeable peel ply,
- this is in turn surrounded with a nonwoven, comprising thermally bonded synthetic fibres such that at least one side of the nonwoven has a consolidated surface with a smaller pore size as compared with the pore size otherwise of the nonwoven, the consolidated surface being arranged with the comparatively smaller pore size of the nonwoven adjacent to the first peel ply.

2. Method for producing fibreglass-reinforced or carbon fibre-reinforced synthetic materials with the following steps:
- resin-impregnated laminate is applied to a mould,
- this laminate is surrounded with a liquid-permeable and gas-permeable peel ply,
- a nonwoven comprising thermally bonded synthetic fibres such that at least one side of the nonwoven has a consolidated surface with a smaller pore size as compared with the pore size otherwise of the nonwoven is applied on top of this peel ply in such a way that the side of the nonwoven with the consolidated surface and the comparatively smaller pore sizes is arranged adjacent to the peel ply and
- the nonwoven is surrounded with a vacuum-tight film, provided with extraction openings via which a vacuum is applied.

3. Method according to Claim 1 or 2, **characterized in that** the nonwoven has a weight per unit area of between 50 g/m² and 1000 g/m², with preference between 100 g/m² and 600 g/m².

4. Method according to one of Claims 1 to 3, **characterized in that** it has a layer thickness of between 0.3 mm and 10 mm.

5. Method according to one of Claims 1 to 4, **characterized in that** the nonwoven consists of polypropylene and/or polyester and/or polyamide fibres and/or copolymers of the aforementioned substances.

6. Method according to one of Claims 1 to 5, **characterized in that** the microfibres forming the nonwoven, produced in a meltblown process, have 0.01 dtex to 0.5 dtex.

7. Method according to one of Claims 1 to 6, **characterized in that** the fibres forming the nonwoven have 0.8 dtex to 20 dtex.

8. Method according to one of Claims 1 to 7, **characterized in that** the nonwoven consists of fine fibres, of thick fibres or of thick fibres and fine fibres.

9. Method according to one of Claims 1 to 8, **characterized in that** small pore sizes are set by the use of fine fibres and a high absorption capacity is achieved by the use of thick fibres.

10. Method according to Claim 9, **characterized in that** it comprises a layer with fine fibres, which has a small pore size, arranged on at least one surface, and a layer of thick fibres, with high absorption capacity, adjoining thereto.

## Revendications

1. Procédé pour la production de matières synthétiques renforcées de fibres de verre ou respectivement de carbone par les étapes qui suivent :
- sur un coffrage rotatif, on applique un stratifié imbibé de résine,
- celui-ci est entouré d'une première couche pelliculable perméable aux gaz et aux liquides,
- celle-ci est entourée d'un voile se composant de fibres synthétiques liées à la chaleur de façon qu'au moins une face du voile présente une surface solidifiée avec une dimension des pores comparativement plus petite que celle habituelle, et la surface solidifiée avec la dimension comparativement plus petite des pores du voile est agencée adjacente à la première couche pelliculable.

2. Procédé pour la production de matières synthétiques renforcées de fibres de verre ou respectivement de carbone par les étapes qui suivent:
- un stratifié imbibé de résine est appliqué sur un moule,
- ce stratifié est entouré d'une couche pelliculable perméable aux liquides et aux gaz,
- au-dessus de la couche pelliculable est appliqué un voile se composant de fibres de matières synthétiques liées à la chaleur de façon qu'au moins une face du voile présente une surface solidifiée avec des pores plus importants que les pores du voile à l'état normal de façon que la face du voile ayant la surface solidifiée et la grandeur compartiment plus petite des pores soit agencée adjacente à la couche pelliculable et
- le voile est entouré d'une feuille étanche au vide et des ouvertures d'aspiration sont prévues, par lesquelles un vide peut être appliqué.

3. Procédé selon la revendication 1 ou 2, **caractérisé en ce que** le voile a un grammage compris entre 50 g/m² et 1000 g/m² préférentiellement entre 100 g/m² et 600 g/m².

4. Procédé selon l'une quelconque des revendications 1 à 3, **caractérisé en ce qu'**il a une épaisseur de couche comprise entre 0,3 mm et 10 mm.

5. Procédé selon l'une quelconque des revendications 1 à 4, **caractérisé en ce que** le voile se compose de polypropylènes et/ou de polyester et/ou de polyamide en fibres et/ou de copolymères des matières qui précèdent.

6. Procédé selon l'une quelconque des revendications 1 à 5, **caractérisé en ce que** des microfibres formant le voile, produites dans un procédé de soufflage sous vide sont de 0,01 dtex à 0,5 tex.

7. Procédé selon l'une quelconque des revendications 1 à 6, **caractérisé en ce que** les fibres formant le voile sont de 0,8 dtex à 20 dtex.

8. Procédé selon l'une quelconque des revendications 1 à 7, **caractérisé en ce que** le voile se compose des fibres fines, de fibres épaisses ou de fibres épaisses et fines.

9. Procédé selon l'une quelconque des revendications 1 à 8, **caractérisé en ce que**, par l'utilisation de fibres assez fines, on peut produire une faible grandeur des pores et par l'utilisation de fibres épaisses, on peut obtenir une forte capacité d'absorption.

10. Procédé selon la revendication 9, **caractérisé en ce qu'**il se compose d'une couche agencée au moins sur une surface avec des fibres fines qui présentent une petite dimension des pores et une couche adjacente de fibres épaisses avec une forte capacité d'absorption.
